# EUROPÄISCHE PATENTSCHRIFT

(11) **EP 0 588 227 B1**
(45) Veröffentlichungstag und Bekanntmachung des Hinweises auf die Patenterteilung: **13.09.1995**
(21) Anmeldenummer: 93114399.4
(22) Anmeldetag: 08.09.1993
(51) Int. Cl.: C09D 5/44, C09D 7/12

(54) **Kathodisch abscheidbare wässrige Elektrotauchlackbäder mit fluorhaltigen Additiven, Verfahren zu deren Herstellung und deren Verwendung für Mehrschichtlackierungen**
Cathodic electrodeposition baths with fluoro containing additives, method for preparation and their use for multi-layer coatings
Bains d'électrodéposition cathodique avec des additives contenant du fluor, méthode pour leur préparation et leur usage pour revêtements multicouches

(30) Priorität: 11.09.1992 DE 4230404
(43) Veröffentlichungstag der Anmeldung: 23.03.1994
(73) Patentinhaber: Herberts Gesellschaft mit beschränkter Haftung, 42285 Wuppertal (DE)
(72) Erfinder: Böhmert, Reiner, D-42781 Haan (DE); Budde, Bettina, D-44797 Bochum (DE); Klein, Klausjörg, D-42289 Wuppertal (DE)
(74) Vertreter: Türk, Gille, Hrabal, Leifert

(56) Entgegenhaltungen:
- EP-A- 0 293 963
- EP-A- 0 362 643
- EP-A- 0 415 305
- EP-A- 0 457 939

## Beschreibung

Die Erfindung betrifft den Zusatz von Additiven zur Oberflächenverbesserung bei der kathodischen Elektrotauchlackierung, insbesondere den Zusatz von Antikratermitteln. Aus so verbesserten Elektrotauchlackbädern werden Filme abgeschieden und diese können als Basisschicht in einer Mehrschichtlackierung verwendet werden.

Die kathodische Elektrotauchlackierung (KTL) ist ein vor allem zum Grundieren von Automobilkarossen häufig angewandtes Verfahren, bei dem wasserverdünnbare, kationische Gruppen tragende Kunstharze mit Hilfe von Gleichstrom auf elektrisch leitende Körper abgeschieden werden. Dieses Prinzip ist in der Literatur beschrieben und in der Praxis weit verbreitet. Dabei wird ein Werkstück mit elektrisch leitender Oberfläche aus Metall oder elektrisch leitendem Kunststoff in ein wäßriges Elektrotauchlackbad gebracht, als Kathode an eine Gleichstromquelle angeschlossen und dann wird durch den fließenden Strom der Lack auf der Oberfläche koaguliert (EP-B-0 066 859, EP-A-0 004 090, DE-A-32 15 891). Das Elektrotauchlackbad besteht aus einer wäßrigen Dispersion, z.B. Suspension oder Emulsion, oder aus einer wäßrigen Lösung von einem oder mehreren Bindemitteln, die durch zumindest partielle Salzbildung mit organischen oder anorganischen Neutralisationsmitteln wasserdispergierbar gemacht werden, aus darin dispergierten Pigmenten, Füllstoffen, Additiven, Lösemitteln und üblichen Hilfsmitteln.

Mit diesen Lackmaterialien sollen nach Abscheidung und dem Einbrennen und Vernetzen des entstandenen Films glatte Oberflächen erzeugt werden. Diese Filme sollen rauhe und unterschiedliche Untergrundflächen gleichmäßig abdecken. Sie dienen zur Erzeugung eines homogenen Untergrundes für die Folgeschichten, die dann zusammen eine qualitativ hochwertige Mehrschichtlackierung ergeben sollen. In der Praxis treten jedoch in dem eingebrannten KTL-Film häufig Oberflächenstörungen, insbesondere Krater, oder ungleichmäßige Oberflächen auf. Die Ursachen dieser Beschichtungsstörungen können in den eingesetzten Elektrotauchlack-Materialien liegen, häufig zeigt sich jedoch, daß diese Störungen aus in das Elektrotauchlackbad eingeschleppten Verunreinigungen stammen. Beispiele für Verunreinigungen aus dem Lackmaterial sind Gelteilchen aus der Bindemittelherstellung, Verunreinigungen der Pigmente sowie Verunreinigungen, z.B. Öle oder Ablagerungen, aus Geräten, die zur Herstellung der Überzugsmittel dienen. Nachträglich über die zu beschichtenden Substrate eingeschleppte Fremdsubstanzen sind z.B. Tiefziehfette, Korrosionsschutzfette, Nahtabdichtungsmaterialien sowie Substanzen aus der Vorbehandlung.

Eine weitere Klasse von Verunreinigungen sind solche, die nach dem Abscheiden des Elektrotauchlacküberzugs aus der Luft auf dem nicht vernetzten Lackfilm abgelagert werden, beispielsweise silikonhaltige Aerosole, sowie Schmiermittel aus den Transportsystemen, die zur Bewegung der zu beschichtenden Teile notwendig sind.

Diese Stoffe gelangen vor dem Einbrennen auf den Lackfilm und verursachen dann bei dem Einbrennen beispielsweise durch Unverträglichkeiten Oberflächenstörungen, wie z.B. Krater. Eine mögliche Schädigung der Oberfläche durch diese Materialien ist nicht vorherzusehen, sondern muß durch Experiment ermittelt werden.

Diese Oberflächenstörungen verlangen aufwendige Nacharbeiten, um eine glatte Oberfläche der Nachfolgeschichten zu erreichen. Um deshalb eine kontinuierliche Produktion sicherzustellen, ist es notwendig, diese Art von Oberflächenstörungen zu vermeiden. Da eine Verhinderung der vielfältigen Ursachen von Kratern nur schwer zu erreichen ist, wird im allgemeinen versucht, die Kraterbildung durch Zusatz von Additiven zu vermeiden.

Als Additive zur Vermeidung von Kratern sind z.B. Silikonöle bekannt.

Diese können zwar in der angewandten Schicht die Kraterbildung unterdrücken, führen aber häufig in Nachfolgeschichten zu starken Oberflächenstörungen. Außerdem ist festzustellen, daß die Nachfolgeschichten schlecht auf solchen Basisschichten haften. Deshalb sind diese Additive für KTL-Schichten nicht geeignet.

Deshalb wurde versucht, andere, nicht silikonhaltige Additive zu finden, um diese häufigen Oberflächenstörungen zu vermeiden. Es werden in der US-A-4 810 535 als Zusatzmittel zu KTL-Systemen Polyoxyalkylenpolyamin-Epoxidharz-Umsetzungsprodukte beschrieben. Damit sollen Krater vermieden werden. In der EP-A-0 324 951 werden Polyoxyalkylenpolyamine als Zusatz zu KTL-Bädern beschrieben, um störungsfreie Filmoberflächen zu erhalten. In der DE-A-38 30 626 werden als Zusatzmittel zu KTL-Bädern modifizierte Acrylate beschrieben, die neutralisierbar oder nicht neutralisierbar dem Lackmaterial zugesetzt werden können. Auch in diesem Fall sollen Oberflächenstörungen verschiedener Art vermieden werden. In der EP-A-0 301 293 werden kathodische Elektrotauchlackbäder beschrieben, die als Additiv Homo- oder Copolymere eines Alkylvinylethers enthalten. Alle diese Materialien zeigen die Eigenschaft, daß sie in größeren Mengen eingesetzt werden müssen, um eine gute Antikraterwirkung zu erzielen. Dabei ergibt sich die Schwierigkeit, daß die Haftung zu Nachfolgeschichten, z.B. Füller oder Unterbodenschutzmaterialien, deutlich verschlechtert wird und Oberflächenrauhigkeit und Verlaufsstörungen auftreten, was selbst bei kleinen Zusatzmengen erfolgen kann. Das führt dann zu schlechten Resultaten in Steinschlagtests oder der Korrosionsschutz von kritischen Karrosserieteilen wird verschlechtert. Außerdem treten dann häufig allgemeine Verlaufstörungen auf, die die Qualität der Nachfolgeschichten negativ beeinflussen.

Aus der EP-A-0 362 643 sind anionische wäßrige Lacksysteme bekannt, die fluorhaltige, hydroxyfunktionelle (Meth)acrylcopolymere mit Säurezahlen von 15 - 250 mg KOH/g als Additive gegen Oberflächenstörungen enthalten. Die dort beschriebenen Systeme sind wäßrige Überzugsmittel für Klarlacküberzüge. Die Frage der Haftung von Nachfolgeschichten stellt sich dabei nicht. Außerdem hat es sich im Rahmen der vorliegenden Erfindung gezeigt, daß die dort beschriebenen Copolymeren in kathodisch abscheidbaren Elektrotauchlackbädern zur Bildung von Koagulaten führen und daher im KTL nicht einsetzbar sind.

Unabhängig von der Ursache der Krater wurde festgestellt, daß die Wirkung der bekannten Antikratermittel für KTL-Systeme in der Praxis unzureichend ist. Selbst erhöhte Mengen dieser Additive führen nicht immer zu einer völligen Beseitigung der Krater. Deshalb müssen häufig durch KTL beschichtete Substrate nachgearbeitet werden, z.B. durch Schleifen und/oder Nachlackieren.

Es bestand daher die Aufgabe ein Oberflächen verbesserndes Mittel, insbesondere ein Antikratermittel, für KTL-Systeme bereitzustellen, das auch beim Einsatz in geringen Mengen eine verbesserte Wirkung aufweist, keine Oberflächenrauhigkeit und Verlaufsstörungen erzielt und eine gute Haftung von Nachfolgeüberzügen gewährleistet.

Es hat sich gezeigt, daß diese Aufgabe gelöst werden kann durch den Zusatz bestimmter fluorenthaltender Copolymerer zu KTL-Bädern.

Ein Gegenstand der vorliegenden Erfindung sind daher kathodisch abscheidbare wäßrige Elektrotauchlackbäder (KTL-Bäder), die übliche für die kathodische Abscheidung geeignete Bindemittelsysteme neben gegebenenfalls Vernetzern, Pigmenten, Füllstoffen, Lösemitteln und/oder Additiven enthalten, und dadurch gekennzeichnet sind, daß sie 0,05 bis 5 Gew.-%, bevorzugt unter 2 Gew.-% und besonders bevorzugt bis zu 1 Gew.-%, jeweils bezogen auf die Bindemittel und gegebenenfalls vorhandene Vernetzer, eines oder mehrerer Copolymerer mit einem Fluorgehalt von 0,1 bis 5 Gew.-% und einer gewichtsmittleren Molmasse (Mw) von 2000 bis 100000, die im wesentlichen frei von sauren oder anionischen Gruppen sind, und durch radikalische Polymerisation von olefinisch ungesättigten Monomeren erhältlich sind, enthalten. Bevorzugt werden die erfindungsgemäßen KTL-Bäder so formuliert, daß der Fluorgehalt des Bades, bezogen auf den Festkörpergehalt von Bindemittel plus gegebenenfalls vorhandenem Vernetzer, 5 x 10⁻⁴ bis 0,1 Gew.-% beträgt.

Die Fluor enthaltenden Copolymeren sind erhältlich durch radikalische Polymerisation mindestens eines Fluor enthaltenden olefinisch ungesättigten Monomeren mit mindestens einem damit radikalisch copolymerisierbaren Monomeren. Die Anteile der Fluor enthaltenden Monomeren werden so gewählt, daß der gewünschte Fluorgehalt erzielt wird. Die radikalische Polymerisation kann unter üblichen Bedingungen erfolgen, wie sie beispielsweise für die nachfolgend beschriebene bevorzugte Copolymerisation der Komponenten a) und b) beschrieben werden.

Gemäß einer bevorzugten Ausführungsform der Erfindung, sind die Fluor enthaltenden Copolymere, die dem KTL-Bad zugesetzt werden, erhältlich durch radikalische Polymerisation von
a) mindestens einer olefinisch ungesättigten Verbindung ausgewählt aus solchen der allgemeinen Formel 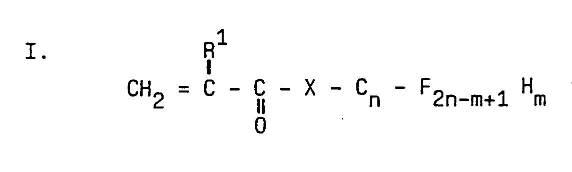 und

   II. CH₂ = CH - (CH₂)ₖ - O - (CO)ₗ - Cₙ F₂ₙ₋ₘ₊₁ Hₘ

   worin
   - R¹ =: H oder CH₃,
   - X =: O oder NR²,
   - R² =: H oder C₁ - C₈-Alkyl,
   - n =: 2 bis 20,
   - m =: 0 bis 2n,
   und k und l gleich oder verschieden sind und 0 oder 1 bedeuten,
   und
b) mindestens einem von sauren oder anionischen Gruppen, insbesondere Carboxylgruppen im wesentlichen freien mit den Verbindungen a) radikalisch copolymerisierbaren Monomeren.

Die Fluor enthaltenden Copolymeren werden in einer Menge von 0,05 bis 5 Gew.-% bezogen auf die KTL-Bindemittel einschließlich gegebenenfalls vorhandener Vernetzer eingesetzt.

Im Rahmen der Erfindung hat es sich gezeigt, daß es günstig ist, wenn die Copolymeren einen Fluorgehalt von 0,1 bis 5 Gew.-%, bevorzugt unter 2 Gew.-%, besonders bevorzugt unter 1 Gew.-% und ein Mw von 2000 bis 100000, bevorzugt von 5000 bis 40000 aufweisen.

Die Copolymere sollen keine oder zumindest im wesentlichen keine anionischen oder in anionische Gruppen tiberführbare Substituenten, wie z.B. -COOH, aufweisen. Sie können gegebenenfalls weitere funktionelle Gruppen tragen, wie z.B. -OH oder -NHR. Sie wirken als Oberflächen verbessernde Additive wenn sie in KTL-Systemen in einer Menge < 5 Gew.-%, bezogen auf das KTL-Bindemittel einschließlich vorhandenem Vernetzer, jeweils berechnet auf den Harzfestkörper, eingesetzt werden. Besonders bevorzugt werden sie in Mengen unter 2 Gew.-% und insbesondere bis zu 1 Gew.-% eingesetzt. Die Untergrenze liegt bevorzugt über 0,1 Gew.-%. Die optimale Menge kann leicht durch einfache Versuche ermittelt werden. Sie ist bevorzugt so gering wie möglich.

Bei der KTL-Abscheidung der erfindungsgemäßen KTL-Bäder entstehen nach dem Einbrennen (z.B. bei Temperaturen von 110 bis 190°C) glatte, krater- und störungsfreie Oberflächen, die keine Haftungsstörungen zu Nachfolgeschichten aufweisen. Kathodische Elektrotauchlackbäder, denen erfindungsgemäß das fluorhaltige Copolymere zugesetzt worden ist, zeichnen sich durch eine außerordentliche Beständigkeit gegenüber Kontaminierung durch kraterverursachende Substanzen aus.

Erfindungsgemäß werden übliche Elektrotauchlackbäder eingesetzt, die aus einer wäßrigen Lösung von kathodisch abscheidbaren selbst- oder fremdvernetzenden Kunstharzen, gegebenenfalls Vernetzern, gegebenenfalls üblichen Pigmenten und/oder Füllstoffen sowie weiteren lacküblichen Additiven und Hilfsstoffen, sowie gegebenenfalls organischen Lösemitteln bestehen. Der Festkörpergehalt der erfindungsgemäß eingesetzten Elektrotauchlackbäder, der sich aus Bindemitteln, gegebenenfalls vorhandenem Vernetzer, Pigmenten und/oder Füllstoffen errechnet, liegt beispielsweise bei 10 bis 25 Gew.-% bezogen auf das gesamte Bad. Das Verhältnis von Pigmenten zu Bindemittel (plus gegebenenfalls vorhandenem Vernetzer) liegt beispielsweise bei 0 bis 0,7 : 1, bezogen auf das Gewicht. Der Gehalt an organischen Lösemitteln liegt beispielsweise bei bis zu 10 Gew.-%. Werden nicht selbstvernetzende Bindemittel eingesetzt, die einen Vernetzer benötigen, so liegt das Verhältnis von Bindemittel/Vernetzer beispielsweise bei 90 : 10 bis 60 : 40, jeweils bezogen auf das Harzfestkörpergewicht.

Die in den Elektrotauchbädern verwendeten Bindemittel enthalten für diesen Zweck übliche basische Harze mit basischen Gruppen, die Schwefel, Stickstoff oder Phosphor enthalten können. Bevorzugt sind stickstoffhaltige basische Gruppen. Diese Gruppen können quaternisiert vorliegen, oder sie werden mit einem üblichen Neutralisationsmittel, wie z.B. organische Monocarbonsäuren in ionische Gruppen überführt.

Basische Basisharze sind primäre, sekundäre oder tertiäre Aminogruppen enthaltende Harze, deren Aminzahlen z.B. bei 20 bis 250 mg KOH/g liegen. Das Gewichtsmittel (Mw) der Molmasse der Basisharze liegt bevorzugt bei 300 bis 10000. Als basische Gruppen treten neben -NH₂, -NRH, -NR₂ und -N⁺R₃, z.B. auch -S⁺R₂, -P⁺R₃ auf, worin R beispielsweise einen Alkylrest mit 1 bis 4 C-Atomen darstellt und die Reste R gleich oder verschieden sein können. Bevorzugt sind stickstoffhaltige basische Gruppen. Als Neutralisationsmittel, die in den wäßrigen Bindemittellösungen Anionen liefern, können die theoretisch bekannten und in der Praxis verwendeten anorganischen und/oder organischen Säuren eingesetzt werden. In der Praxis werden hauptsächlich einwertige Säuren eingesetzt, die eine gute Löslichkeit des Bindemittels bewirken. Bevorzugt werden Ameisensäure, Essigsäure, Milchsäure oder Alkylphosphorsäuren eingesetzt.

Basisharze sind z.B. Aminoacrylatharze, Aminoepoxidharze, Aminoepoxidharze mit endständigen Doppelbindungen, Aminopolyurethanharze, aminogruppenhaltige Polybutadienharze und modifizierte Epoxidharz-Kohlendioxid-Amin-Umsetzungsprodukte.

Bevorzugt werden Aminoepoxidharze, insbesondere solche auf Basis von Bisphenol A. Solche Basisharze werden in der Literatur, z.B. in der EP-A-0 082 291 und EP-A-0 234 395, beschrieben.

Die Basisharze können allein oder im Gemisch eingesetzt werden. Sie können selbst- oder fremdvernetzend sein. Als gegebenenfalls verwendbare Vernetzungsmittel für fremdvernetzende Basisharze eignen sich übliche Vernetzer, wie beispielsweise Triazinharze, blockierte Isocyanate, Vernetzer mit endständigen Doppelbindungen und zur Michael-Addition mit aktivierten Doppelbindungen fähige Vernetzer mit aktivem Wasserstoff. Diese sind beispielsweise in der EP-A-0 245 786, EP-A-0 004 090, EP-A-0 319 929, DE-A-37 20 956 und in EP-A-0 193 685, US-A-4 810 535 und DE-A-38 30 626 beschrieben. Die verschiedenen Vernetzer können einzeln oder gemischt zusammen mit den Basisharzen eingesetzt werden.

Die erfindungsgemäß als Antikratermittel verwendeten fluorhaltigen Copolymeren sind in an sich bekannter Weise durch radikalisch initiierte Copolymerisation erhältlich. Die zur Copolymerisation eingesetzten Monomeren sollen im wesentlichen keine anionischen oder in anionische Gruppen überführbare Substituenten tragen.

Wie vorstehend erwähnt, können gemäß einer bevorzugten Ausführungsform die erfindungsgemäß eingesetzten Fluor enthaltenden Copolymeren hergestellt werden aus olefinisch ungesättigten Verbindungen der Gruppen a) und b).

Beispiele für fluorhaltige olefinisch ungesättigte Monomere der unter die Gruppe a) fallenden allgemeinen Formel I sind Ester oder gegebenenfalls N-Alkyl-substituierte Amide der (Meth)acrylsäure mit linearen oder verzweigten teil- oder perfluorierten Alkylresten der Formel -Cₙ F₂ₙ₋ₘ₊₁ Hₘ. Dabei bedeutet "(Meth)acryl" im folgenden "Methacryl" und/oder "Acryl". n ist eine Zahl zwischen 2 und 20, m nimmt Werte zwischen 0 und 20 an. Beispiele für olefinisch ungesättigte Monomere vom Typ der allgemeinen Formel I sind 1,1,2,3,3,3-Hexa-fluorpropyl(meth)acrylat, 2,2,3,3-Tetrafluorpropyl(meth)acrylat, 2,2,3,3,4,4,5,5-Octafluorpentyl(meth)acrylat, 2,2,3,3,4,4,5,5,6,6,7,7-Dodecafluorheptyl(meth)acrylat, 2,2,3,3,3-Pentafluorpropyl(meth)acrylat, 2,2,3,3,4,4,4-Heptafluorbutyl(meth)acrylat, 2,2,2-Trifluorethyl(meth)acrylat, Trifluoroctyl(meth)acrylat, Hexadecafluornonyl(meth)acrylat, Hexafluorisopropyl(meth)acrylat, 2,2,3, 4,4,4-Hexafluorbutyl-(meth)acrylat, 2-Perfluoralkylethyl(meth)acrylate, wie z.B. 2-Perfluoroctylethyl(meth)acrylat, sowie Gemische davon.

Beispiele für fluorhaltige olefinisch ungesättigte Monomere der unter die Gruppe a) fallenden allgemeinen Formel II sind Vinylether oder Allylether teil- oder perfluorierter Alkohole mit linearen oder verzweigten Alkylresten oder Vinylester oder Allylester teil- oder perfluorierter Carbonsäuren mit linearen oder verzweigten Alkylresten der Formel -Cₙ F₂ₙ₋ₘ₊₁ Hₘ, n und m wie oben beschrieben. Beispiele für olefinisch ungesättigte Vinyl- und Allylether vom Typ der allgemeinen Formel II sind 1,1,2,3,3,3-Hexafluorpropylvinyl- und allylether, 2,2,2-Trifluorethylvinyl- und allylether, Trifluor-octylvinyl- und allylether, 2,2,3,3-Tetra-fluorpropylvinyl- und allylether, 2,2,3,3,3-Pentafluorpropylvinyl- und allylether, 2,2,3,3,4,4,5,5-Octafluorpentylvinyl- und allylether, 2,2,3,3, 4,4,4-Heptafluorbutylvinyl- und allylether, Hexadecafluornonyl-vinyl- und allylether, Hexafluorisopropylvinyl- und allylether, 2,2,3,4,4,4-Hexafluorbutylvinyl- und-allylether, 2-Perfluoralkylethylvinyl- und -allylether, wie z.B. 2-Perfluoroctylethylvinyl- und allylether, und Gemische davon.

Beispiele für olefinisch ungesättigte Allyl- und Vinylester vom Typ der allgemeinen Formel II sind Allyl- und Vinyl-5-H-octafluorpentanoat, Allyl- und Vinyl-7-H-dodecafluorheptanoat, Allyl- und Vinyl-3,3,4,4-tetrafluorbutyrat, Allyl- und Vinyl-3,3,4,4,5,5,6,6-octafluorhexanoat, Allyl- und Vinyl-3,3,4,4,4-pentafluorbutyrat, Allyl- und Vinyl-3,3,4,4, 5,5,6,6,6-nonafluorhexanoat, Perfluoralkylcarbonsäureallyl- und vinylester wie z.B. Allyl- und Vinylheptafluorbutyrat, Allyl- und Vinyltridecafluorheptanoat, Allyl- und Vinylpentadecafluoroctoat, und Gemische davon.

Die fluorhaltigen olefinisch ungesättigten Monomere werden allein oder im Gemisch in einer solchen Menge bei der Herstellung der erfindungsgemäß bevorzugt als Antikratermittel in KTL einsetzbaren fluorhaltigen Copolymere eingesetzt, daß im Copolymer ein Fluorgehalt von 0,1 bis 5 Gew.-%, bevorzugt unter 2 Gew.-%, besonders bevorzugt unter 1 Gew.-% resultiert.

Als mit Verbindungen a) radikalisch copolymerisierbare olefinisch ungesättigte Monomere b) können im Prinzip alle bekannten olefinisch ungesättigten Monomere alleine oder im Gemisch eingesetzt werden, die keine sauren oder anionischen Gruppen tragen.

Bevorzugt tragen die Monomeren vom Typ b) keine funktionellen Gruppen. Es handelt sich beispielsweise um Vinylverbindungen wie z.B. Styrol, Vinyltoluol, Vinylacetat, α-Methylstyrol oder bevorzugt um (Meth)acrylsäureester aliphatischer Alkohole wie z.B. Methyl(meth)acrylat, Ethyl(meth)acrylat, Butyl(meth)acrylat, Isobutyl(meth)acrylat, Ethylhexyl(meth)acrylat, Lauryl(meth)acrylat. Bevorzugt werden die Acrylate mit Alkylresten zwischen C₃ und C₆ eingesetzt.

Durch Verwendung funktionalisierter Monomerer können gegebenenfalls Substituenten in die Copolymeren eingebaut werden. Z.B. können Hydroxyl-, Nitril- oder Amidgruppen, aber auch kationische oder in kationische Gruppen überführbare Gruppen, wie z.B. stickstoffhaltige Reste eingeführt werden. Wesentlich ist, daß die olefinisch ungesättigten Monomeren b) keine anionischen oder in anionische Gruppen überführbare Gruppen wie z.B. Carboxyl- oder Sulfonsäuregruppen tragen.

Die erfindungsgemäß als Mittel zur Oberflächenverbesserung KTL-Bädern zugesetzten Copolymerisate werden durch Copolymerisation von olefinisch ungesättigten Monomeren, beispielsweise der olefinisch ungesättigten Monomeren der Gruppen a) und b) hergestellt, wobei in üblicher Weise radikalisch initiiert und gegebenenfalls in organischer Lösung gearbeitet werden kann. Als Initiatoren können übliche dem Fachmann geläufige thermisch spaltbare Radikalinitiatoren eingesetzt werden. Beispiele für verwendbare Radikalinitiatoren sind Peroxide wie Dialkylperoxide, z.B. Di-tert-butylperoxid; Diacylperoxide, z.B. Dibenzoylperoxid; Peroxodicarbonate, z.B. Di-sec-butyl-peroxodicarbonat; Peroxidester, z.B. 2-Ethylhexansäure-tert-butyl-perester; Hydroperoxide, wie Cumolhydroperoxid; Ketonperoxide, wie Methylethylketonperoxid. Beispiele für weitere verwendbare Radikalinitiatoren sind Azoverbindungen wie Azodinitrile, z.B. Azobisisobutyronitril und die entsprechend substituierten Verbindungen. Als Lösemittel können organische Lösemittel einzeln oder im Gemisch, z.B. Toluol, Xylol, Cyclohexan oder bevorzugt wasserverdünnbare organische Lösemittel wie z.B. Butoxyethanol, Methoxypropanol, Isopropanol, Butanol, Dipropylenglykoldimethylether verwendet werden. Die Copolymerlösungen können vor dem erfindungsgemäßen Einsatz als Antikratermittel in KTL, z.B. durch Vakuumdestillation vom Lösemittel befreit werden. Die Reaktionstemperaturen liegen beispielsweise in der Größenordnung von 80 bis 200°C, bevorzugt von 100 bis 160°C.

Die aus den Monomeren a) und b) so hergestellten Copolymeren stellen hochviskose Flüssigkeiten dar und weisen eine gewichtsmittlere Molmasse von 2000 bis 100000 auf, bevorzugt liegt sie bei 5000 bis 40000.

Im allgemeinen ist es günstig, wenn die erfindungsgemäß eingesetzten fluorhaltigen Copolymere eine begrenzte Verträglichkeit mit den KTL-Bindemitteln aufweisen, das heißt wenn sie mit diesen keine dauerhaften homogenen Phasen bilden.

Die erfindungsgemäßen Elektrotauchlacke können Pigmente enthalten. Als Pigmente können für die KTL-Abscheidung übliche Pigmente und/oder Füllstoffe eingesetzt werden, wie beispielsweise Ruß, Titandioxid, Eisenoxidrot, Kaolin, Talkum oder Siliciumdioxid. Die Pigmente werden bevorzugt in üblichen Pigmentpastenharzen dispergiert und angerieben. Solche Harze sind beispielsweise in der EP-A-0 469 497 beschrieben. Das Herstellen der Pigmentpasten und das Herstellen der kathodischen Tauchlackbäder sind dem Fachmann geläufig. Beispielsweise können Pigmente und/oder Füllstoffe in üblichen Anreibebindemitteln dispergiert und dann auf einem geeigneten Aggregat, z.B. einer Perlmühle vermahlen werden. Die so erhaltene Pigmentpaste kann dann in verschiedener Weise den KTL-Bindemitteln zugesetzt werden. Beispielsweise wird sie mit den KTL-Bindemitteln vermischt. Aus diesem Material kann dann durch Verdünnen mit voll entsalztem Wasser das KTL-Überzugsbad hergestellt werden. Ein Beispiel für eine andere Vorgehensweise überführt zuerst die neutralisierten und somit wasserlöslichen Bindemittel oder Bindemittelmischungen in eine Dispersion. Diese wird weiter mit voll entsalztem Wasser verdünnt und danach wird die wäßrige Pigmentpaste zugefügt. Man erhält so ebenfalls ein beschichtungsfähiges KTL-Bad. Die erfindungsgemäß eingesetzten Elektrotauchlackbäder enthalten neben Pigmenten und Füllstoffen auch die notwendigen Neutralisationsmittel; sie können zusätzlich für KTL-Bäder übliche Lösungsmittel und/oder weitere lackübliche Additive oder Hilfsstoffe, wie z.B. Entschäumer oder Katalysatoren, enthalten.

Das oberflächenverbessernde Mittel kann den Elektrotauchlackbädern von vornherein bei der Herstellung, oder aber auch nachträglich unmittelbar bei der Vewendung zur Elektrotauchlackierung, zugesetzt werden. Das erfindungsgemäß verwendete Antikratermittel kann in geringer Menge eingesetzt werden.

Das erfindungsgemaß eingesetzte Antikrateradditiv kann beispielsweise in der Bindemittelmischung vor oder nach dem Neutralisieren dispergiert werden und gemeinsam mit dem Bindemittel in die Dispersionsphase überführt werden. Ein Beispiel für eine andere Verfahrensweise liegt darin, daß nach Überführung der Bindemittel in die Wasserphase das Additiv mit einem Hilfsmittel, wie z.B. einem Teil der dispergierbaren neutralisierten Harze oder dem neutralisierten Pastenharz oder einem geeigneten Lösemittel der Dispersion zugeführt werden. Nach gründlicher Homogenisation ist das Additiv stabil eingearbeitet.

Eine weitere Möglichkeit besteht darin, das Antikrateradditiv in die Pigmentpaste einzuarbeiten. Das geschieht vorteilhafterweise vor dem Vermahlen der Pigmentpaste, um so sicherzustellen, daß das Additiv homogen in der Pigmentpaste verteilt wird. Die so erhaltenen Pasten sind stabil und zeigen nach Zufügen zu dem Elektrotauchlacküberzugsbad die gewünschten Eigenschaften.

Selbstverständlich kann das erfindungsgemäß als Antikratermittel in kathodischen Elektrotauchlacken einsetzbare fluorhaltige Copolymere auch im Gemisch mit einem oder mehreren anderen Antikratermitteln, die für die Anwendung in kathodischen Elektrotauchlackbädern geeignet sind, eingesetzt werden.

Beispiele für solche in kathodischen Elektrotauchlackbädern als Antikratermittel einsetzbare Substanzen sind Copolymere von Alkylvinylethern, Polyoxyalkylenpolyamine, Polyetherurethane mit im Molekül befindlichen Amingruppen, kationische Acrylatharze, kationische Mikrogele, Polymermikroteilchen und/oder Polyoxyalkylenpolyamin-Epoxidharz-Umsetzungsprodukte.

Dabei ist darauf zu achten, daß die Summe der eingesetzten Antikratermittel möglichst gering ist, bevorzugt unter 2 Gew.-%. Wird die Menge zu groß, können sich Nachteile bei den Lackeigenschaften ergeben.

Es ist möglich, zu beschichtungsfertigen KTL-Bädern das Antikrateradditiv nachträglich zuzusetzen. Es muß dafür in eine wasserverdünnbare Form überführt werden, wie z.B. durch Lösemittel, wasserdispergierbare Emulgatoren, wasserverdünnbare Bindemittel oder wasserverdünnbare Pastenharze. Diese Vorgehensweise ist besonders dann geeignet, wenn es sich herausgestellt hat, daß beim Arbeiten mit einem KTL-Bad Oberflächenstörungen auftreten. Nach dem Zusatz des erfindungsgemäßen Antikratermittels werden diese Störungen dann beseitigt.

Aus den erfindungsgemäß mit Antikratermittel versehenen Elektrotauchlackbädern können unter üblichen Bedingungen verschiedene Substrate beschichtet werden. Diese weisen nach dem Einbrennen eine glatte, kraterfreie Oberfläche auf. Durch das erfindungsgemäße Antikrateradditiv werden sonstige Lackeigenschaften, wie z.B. Korrosionsschutz, Steinschlagfestigkeit, Nachfolgeschichthaftung, nicht beeinflußt. Das erfindungsgemäß verwendete Antikratermittel eignet sich somit insbesondere auf dem Kraftfahrzeugsektor, beispielsweise zur Grundierung von Kraftfahrzeugkarosserien oder Kraftfahrzeugkarosserieteilen, mit nachfolgendem Mehrschicht-Lackaufbau.

Beispielsweise kann ein üblicher Decklack zur Erzielung einer Zweischichtlackierung oder ein in der Automobilserienlackierung üblicher Mehrschichtlackaufbau aus wasserverdünnbaren und/oder lösemittelhaltigen und/oder pulverförmigen Überzugsmitteln, wie z.B. Füller, Basislack und Klarlack, aufgebracht werden. Vor Auftrag weiterer derartiger Lackschichten kann es vorteilhaft sein, die unter Verwendung der erfindungsgemäßen Elektrotauchlackbäder mit einer elektrophoretisch abgeschiedenen und eingebrannten Grundierung versehenen Substrate, z.B. Automobilkarossen, wie auch im Falle von mit anderen als den erfindungsgemäßen Elektrotauchlacken elektrophoretisch grundierten Substraten, einer Behandlung mit autophoretisch abscheidbaren Überzugsmitteln zu unterziehen. Autophoretisch abscheidbare Überzugsmittel sind bekannt, sie enthalten als Hauptkomponenten Säure wie z.B. Flußsäure, Oxidationsmittel wie z.B. Wasserstoffperoxid und anionische Gruppen enthaltende oder neutrale Bindemittel in Form von Dispersionen mit negativer Oberflächenladung neben weiteren Komponenten wie beispielsweise Pigmenten, Füllstoffen und anderen Additiven. Die autophoretisch abscheidbaren Überzugsmittel ermöglichen im stromlosen Tauchverfahren die Beschichtung metallischer, mit Säure angreifbarer Oberflächen, wie z.B. Kontaktierstellen oder vom Umgriff nicht erreichte Stellen der elektrophoretisch beschichteten Substrate .

In den folgenden Beispielen beziehen sich Prozentangaben und Teile (T), sofern nicht anders angegeben, auf das Gewicht. In den Beispielen wurde erfindungsgemäß als Antikratermittel ein handelsübliches fluorhaltiges Copolymerisat (EFKA-^{R} 777) eingesetzt, das durch Destillation von Lösemitteln befreit war und den anspruchsgemäßen Spezifikationen entsprach.

### Beispiel 1 (KTL-Dispersion):

a) Gemäß EP-A-0 012 463 werden 391 g Diethanolamin, 189 g 3-(N,N-Dimethylamino)-propylamin und 1147 g eines Adduktes aus 2 mol Hexandiamin-1,6 und 4 mol Glycidylester der Versaticsäure (Cardura ^{R} E10 von Shell) zu 5273 g Bisphenol A Epoxidharz (Epoxidäquivalentgewicht ca. 475) in 3000 g Ethoxypropanol gegeben. Das Reaktionsgemisch wird 4 Stunden unter Rühren bei 85° bis 90°C und dann 1 Stunde bei 120°C gehalten. Anschließend wird mit Ethoxypropanol auf einen Festkörper von 60 % verdünnt.
b) Zu 431 g einer Lösung (75 % in Ethylacetat) eines Umsetzungsproduktes aus 3 mol Toluylendiisocyanat mit 1 mol Trimethylolpropan (Desmodur L) werden bei 70°C langsam unter Rühren 160 g Caprolactam zugefügt. Die Reaktionsmischung wird danach bei 70°C gehalten, bis der NCO-Gehalt praktisch auf Null gesunken ist. Dann wird 2-Butoxyethanol (204 g) zugegeben und das Ethylacetat über eine Kolonne bis zu einem Festkörper von 70 % abdestilliert.

1155 g eines Harzes nach a) und 425 g nach b) werden gemischt und dann im Vakuum auf ca. 85 % Festkörper abdestilliert. Dazu werden in der Wärme 45 mmol/100 g Festkörper Ameisensäure (50 %) gegeben und danach mit vollentsalztem Wasser auf ca. 30 % Festkörper verdünnt.

### Pigmentpastenbeispiel 2

Zu 223 Teilen eines Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.
Dazu werden 5 Teile Ruß, 5 Teile pyrogene Kieselsäure, 25 Teile Dibutylzinnoxidpulver, 38 Teile Bleisilikat und 560 Teile Titandioxid gegeben. Mit ca. 225 Teilen deionisiertem Wasser wird auf ca. 50 % Festkörper eingestellt und auf einer Perlmühle vermahlen. Es entsteht eine stabile Pigmentpaste.

### Vergleichsbeispiel 3a

Es wird wie in Beispiel 1 verfahren, nur werden den Harzen vor der Dispersionsherstellung 5,0 g eines handelsüblichen Polyethylvinylethers (M_{w} 1000 - 10000) zugesetzt.

### Vergleichsbeispiel 3b

Es wird wie in Beispiel 3a verfahren, nur werden den Harzen 13,2 g des Polyethylvinylethers zugesetzt.

### Vergleichsbeispiel 3c

Es wird wie in Beispiel 3a verfahren mit dem Unterschied, daß 20,0 g des Polyethylvinylethers zugesetzt werden.

### Beispiel 3d

Es wird wie in Beispiel 3a verfahren mit dem Unterschied, daß an Stelle des Polyethylvinylethers die gleiche Menge an fluorhaltigem Antikratermittel eingesetzt wird.

### Beispiel 3e

Es wird wie in Beispiel 3c verfahren mit dem Unterschied, daß an Stelle des Polyethylvinylethers die gleiche Menge an fluorhaltigem Antikratermittel eingesetzt wird.

### Lackbeispiel 4a - f

Zu 1700 g einer Dispersion nach den Beispielen 3a - e und 1 werden unter gutem Rühren 600 g einer Pigmentpaste nach Beispiel 2 gegeben. Dazu wird weiter mit 1700 g vollentsalztem Wasser verdünnt. Zu den Bädern wird 4 g einer kraterverursachenden Substanz (ASTM-Öl Nr. 1, Fa. Fuchs-Mineralölwerke GmbH, Mannheim) gegeben und gut homogenisiert.

Aus diesen KTL-Bädern werden übliche zinkphosphatierte Stahlbleche beschichtet (Schichtdicke ca. 20 µm) und bei 170°C für 30 min. eingebrannt. Es wird die Oberfläche beurteilt und die Haftung von Polyvinylchlorid (PVC)-Materialien auf der Oberfläche.

| **Ansatz** | **Oberfläche** | **PVC-Haftung** |
|---|---|---|
| 4a (Vergleich) | stark verkratert | i.O. |
| 4b (Vergleich) | verkratert | i.O. |
| 4c (Vergleich) | kraterfrei | n.i.O. |
| 4d (erfindungsgemäß) | kraterfrei | i.O. |
| 4e (erfindungsgemäß) | kraterfrei | i.O. |
| 4f (Vergleich) | stark verkratert | i.O. |

### Antikratermittelzubereitung 5a (Vergleich)

42,5 Teile des Pastenhares nach EP-A-0 469 497 Beispiel 1 (55 %) werden mit 11,6 Teilen des Polyethylvinylethers aus Beispiel 3a und 2,3 Teilen Essigsäure (50 %) vermischt und mit 43,6 Teilen deionisiertem Wasser verdünnt.

### Antikratermittelzubereitung 5b

Es wird wie in Beispiel 5a verfahren mit dem Unterschied, daß der Polyethylvinylether durch die gleiche Menge des Antikratermittels aus Beispiel 3d ersetzt wird.

### Kathodischer Tauchlack 6a

a) 832 Teile des Monocarbonats eines Epoxidharzes auf der Basis von Bisphenol A (Handelsprodukt Epicote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Biscarbonats eines Epoxidharzes auf der Basis von Bisphenol A (Handelsprodukt Epicote 1001 ^{R}) werden bei 60 bis 80°C 618 Teile eines Umsetzungsprodukte aus 348 Teilen Toluylendiisocyanat (80 % 2,4 Isomeres; 20 % 2,6 Isomeres) mit 274 Teilen 2-Ethylhexanol unter Zugabe von 0,3 % Benzyltrimethylammoniumhydroxid als Katalysator mit einem Rest-NCO-Gehalt von 12,8 % langsam zugegeben unter Katalyse von 0,3 % eines nichtionischen Emulgators (Triton B^{R}). Die Reaktion wird bis zu einem NCO-Wert von ca. 0 fortgesetzt. Das Produkt hat einen Feststoffgehalt von 70 %. Zu 860 Teilen Bishexamethylentriamin in 2315 Teilen Methoxypropanol gelöst werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert und nach Neutralisation mit 30 mmol Ameisensäure/100 g Harz in eine wäßrige Dispersion überführt (Festkörper 40 %).

Zu 815,5 Teilen der vorstehend erhaltenen Dispersion werden 4,5 Teile Ameisensäure (50 %) und 1760 Teile deionisiertes Wasser gegeben. Unter gutem Rühren werden 420 Teile Pigmentpaste nach Beispiel 2 zugesetzt.

### Kathodischer Tauchlack 6b

Zu dem kathodischen Tauchlack 6a werden 1,5 Teile einer kraterbildenden Substanz (Anticorrit 15 N-68, Fa. Fuchs Mineralölwerke, Mannheim) gegeben und über Nacht homogen verteilt. Die kraterbildende Substanz kann zur besseren Einarbeitung vorher mit einer Mischung aus Xylol und Butylglykol verdünnt werden.

### Lackbeispiele 6c - f

Dem verkraterten Lack aus Beispiel 6b wurden verschiedene Mengen Antikratermittelzubereitung 5b (erfindungsgemäß) bzw. 5a (Vergleichsversuch) gemäß nachfolgender Tabelle zugesetzt und gut homogenisiert. Aus diesen kathodischen Lackbädern wurden übliche zinkphosphatierte Stahlbleche beschichtet (Trockenfilmschichtdicke ca. 20 µm) und 15 Minuten bei 165°C Objekttemperatur eingebrannt. Beurteilt wird die Oberfläche und die Haftung von PVC-Materialien auf der Oberfläche. Die PVC-Materialien sind übliche Unterbodenschutzmaterialien der Fa. Dr. A. Stankiewicz GmbH, Celle und Teroson GmbH, Heidelberg. Sie wurden in 3 mm Schichtdicke aufgerakelt und 10 Minuten bei 140°C eingebrannt. Nach 1 Stunde wurde nach Anschneiden die Haftung zwischen Grundierung und PVC-Schicht geprüft.

| **Lackbeispiel** | **Oberfläche** | **Krater** | **Rauhtiefe** (nach DIN 4768) | **PVC-Haftung** |
|---|---|---|---|---|
| 6a (ohne Antikratermittel und ohne Krater verursachende Substanz | i.O. | wenig | 0,33 µm | i.O. |
| 6b (ohne Antikratermittel) | i.O. | viel | wegen Kraterbildung nicht meßbar | i.O. |
| 6c (6b + 6,1 Tl. 5b) | i.O. | einzelne | 0,31 µm | i.O. |
| 6d (6b + 24,4 Tl 5b) | i.O. | keine | 0,31 µm | i.O. |
| 6e (6b + 6,1 Tl. 5a) | n.i.O. | einzelne | 0,43 µm | teilweise i.O. |
| 6f (6b + 24,4 Tl 5a) | i.O. | keine | 0,38 µm | n.i.O. |

Die Korrosionsschutzergebnisse und die technologischen Eigenschaften der verschiedenen Ansätze sind vergleichbar und ergeben gute Resultate.

## Patentansprüche

1. Kathodisch adscheidbare wäßrige Elektrotauchlackbäder, die übliche, kathodisch abscheidbare Bindemittelsysteme enthalten und zusätzlich Vernetzer, Pigmente, Füllstoffe und/oder Additive enthalten können, dadurch gekennzeichnet, daß sie 0,05 bis 5 Gew.-% bezogen auf das Gewicht von Bindemittel und gegebenenfalls vorhandenem Vernetzer, eines oder mehrerer Copolymerer mit einem Fluorgehalt von 0,1 bis 5 Gew.-% und einer gewichtsmittleren Molmasse (Mw) von 2000 bis 100000, die im wesentlichen frei von sauren oder anionischen Gruppen sind, und die durch radikalische Polymerisation erhältlich sind, als Antikratermittel enthalten.

2. Kathodisch abscheidbare Elektrotauchlackbäder nach Anspruch 1, dadurch gekennzeichnet, daß sie ein oder mehrere Fluor enthaltende Copolymere enthalten, die erhältlich sind durch radikalische Polymerisation von
a) mindestens einer olefinisch ungesättigten Verbindung ausgewählt aus solchen der allgemeinen Formel 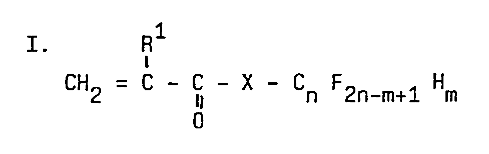 und
II. CH₂ = CH - (CH₂)ₖ - O - (CO)ₗ -Cₙ F₂ₙ₋ₘ₊₁ Hₘ
worin
R¹ = H oder CH₃,
X = O der NR²,
R² = H oder C₁ - C₈-Alkyl,
n = 2 bis 20,
m = 0 bis 2n,
und k und l gleich oder verschieden und 0 oder 1 bedeuten,
und
b) mindestens einem von sauren oder anionischen Gruppen im wesentlichen freien, mit den Verbindungen a) radikalisch copolymerisierbaren Monomeren.

3. Verfahren zur Herstellung kathodisch abscheidbarer wäßriger Elektrotauchlackbäder, die übliche kathodisch abscheidbare Bindemittelsysteme neben Vernetzern, Pigmenten, Füllstoffen, Lösemitteln und/oder Additiven enthalten, dadurch gekennzeichnet, daß man in die Elektrotauchlackbäder 0,05 bis 5 Gew.-%, bezogen auf das Bindemittelsystem und gegebenenfalls vorhandenen Vernetzer eines oder mehrerer Copolymerer mit einem Fluorgehalt von 0,1 bis 5 Gew.-% und einer gewichtsmittleren Molmasse (Mw) von 2000 bis 100000, die im wesentlichen frei von sauren oder anionischen Gruppen sind, und die durch radikalische Polymerisation erhältlich sind, einarbeitet.

4. Verfahren nach Anspruch 3, dadurch gekennzeichnet, daß man das oder die Fluor enthaltenden Copolymeren herstellt durch radikalische Polymerisation von
a) mindestens einer olefinisch ungesättigten Verbindung ausgewählt aus solchen der allgemeinen Formel 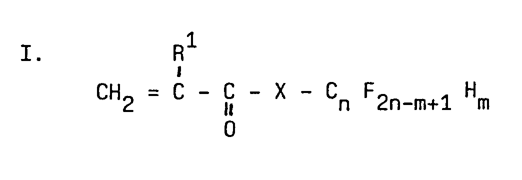 und
II. CH₂ = CH - (CH₂)ₖ - O - (CO)ₗ - Cₙ F₂ₙ₋ₘ₊₁ Hₘ
worin
R¹ = H oder CH₃,
X = O oder NR²,
R² = H oder C₁ - C₈-Alkyl,
n = 2 bis 20,
m = 0 bis 2n,
und k und l gleich oder verschieden sind und 0 oder 1 bedeuten,
und
b) mindestens einem von sauren oder anionischen Gruppen im wesentlichen freien mit den Verbindungen a) radikalisch copolymerisierbaren Monomeren.

5. Verfahren zur Beschichtung von elektrisch leitfähigen Substraten, dadurch gekennzeichnet, daß man das Substrat als Kathode in ein wäßriges Elektrotauchlackbad einbringt, das neben üblichen kathodisch abscheidbaren Bindemittelsystemen Vernetzer, Pigmente, Füllstoffe, Lösemittel und/oder lackübliche Additive enthält, und 0,05 bis 5 Gew.-%, bezogen auf das Bindemittelsystem und gegebenenfalls vorhandene Vernetzer eines oder mehrerer Copolymerer mit einem Fluorgehalt von 0,1 bis 5 Gew.-% und einer gewichtsmittleren Molmasse (Mw) von 2000 bis 100000, die im wesentlichen frei von sauren oder anionischen Gruppen sind und durch radikalische Polymerisation erhältlich sind, als Antikratermittel enthält, und daß man den so erhaltenen Überzug bei erhöhter Temperatur härtet.

6. Verfahren zur Herstellung einer Mehrschichtlackierung, dadurch gekennzeichnet, daß man auf ein nach Anspruch 5 beschichtetes Substrat einen oder mehrere weitere Überzüge aufbringt und diese nacheinander oder gemeinsam aushärtet.

7. Verfahren nach Anspruch 5 oder 6, dadurch gekennzeichnet, daß es zur Beschichtung von Kraftfahrzeugkarossen oder deren Teilen durchgeführt wird.

8. Verwendung der kathodisch abscheidbaren Elektrotauchlackbäder nach Anspruch 1 oder 2 zur kathodischen Elektrotauchlackierung von elektrisch leitfähigen Substraten.

9. Verwendung der kathodisch abscheidbaren Elektrotauchlackbäder nach Anspruch 1 oder 2 zur kathodischen Abscheidung von Grundierungsschichten für Mehrschichtlackierungen.

10. Verwendung der kathodisch abscheidbaren Elektrotauchlackbäder nach Anspruch 1 oder 2 zur Beschichtung von Kraftfahrzeugkarossen oder deren Teilen durch Elektrotauchlackierung.

11. Verwendung von Copolymeren mit einem Fluorgehalt von 0,1 bis 5 Gew.-% und einer gewichtsmittleren Molmasse (Mw) von 2000 bis 100000, die im wesentlichen frei von sauren oder anionischen Gruppen sind, und die durch radikalische Polymerisation erhältlich sind, als Antikratermittel in wäßrigen Elektrotauchlackbädern zur kathodischen Abscheidung.

12. Verwendung nach Anspruch 11, dadurch gekennzeichnet, daß die Copolymeren hergestellt wurden, wie in Anspruch 4 definiert.

## Claims

1. Cathodically depositable aqueous electrocoating lacquer baths, which contain conventional cathodically depositable systems of binders and may contain in addition curing agents, pigments, fillers and/or additives, characterised in that they contain as anticratering agents from 0.05 to 5% by weight, referred to the weight of binder and of curing agent optionally present, of one or more copolymers having a fluorine content of from 0.1 to 5% by weight and a weight average molar mass (Mw) of from 2000 to 100000, which are substantially free from acidic or anionic groups and are obtainable by radical polymerisation.

2. Cathodically depositable electrocoating lacquer baths according to claim 1, characterised in that they contain one or more fluorine-containing copolymers which are obtainable by radical polymerisation of
a) at least one olefinically unsaturated compound selected from those of the general formula 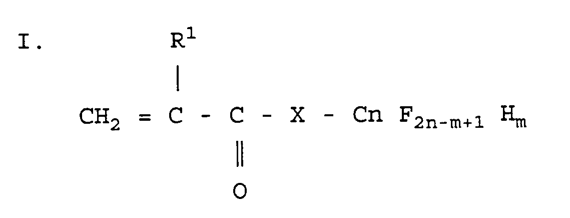 and
II. CH₂ = CH - (CH₂)ₖ - O - (CO)ₗ - Cₙ F₂ₙ₋ₘ₊₁ Hₘ
wherein
R¹ = H or CH₃,
X = O or NR²,
R² = H or C₁ to C₈ alkyl,
n = 2 to 20,
m = 0 to 2n,
and k and l are identical or different and signify 0 or 1,
and
b) at least one monomer which is substantially free from acidic or anionic groups and is radically copolymerisable with the compounds a).

3. Method for the preparation of cathodically depositable aqueous electrocoating lacquer baths, which contain conventional cathodically depositable systems of binders in addition to curing agents, pigments, fillers and/or additives, characterised in that from 0.05 to 5% by weight, referred to the system of binders and to the curing agent optionally present, of one or more copolymers having a fluorine content of from 0.1 to 5% by weight and a weight average molar mass (Mw) of from 2000 to 100000, which are substantially free from acidic or anionic groups and are obtainable by radical polymerisation, are incorporated into the electrocoating lacquer baths.

4. Method according to claim 3, characterised in that the fluorine-containing copolymer or copolymers are prepared by radical polymerisation of
a) at least one olefinically unsaturated compound selected from those of the general formula 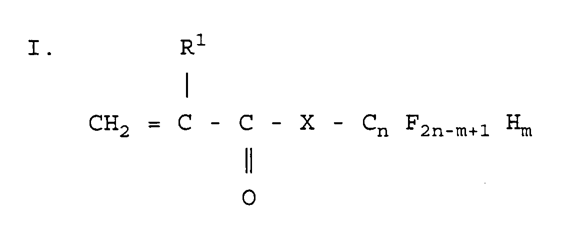 and
II. CH₂ = CH - (CH₂)ₖ - O - (CO)ₗ - Cₙ F₂ₙ₋ₘ₊₁ Hₘ
wherein
R¹ = H or CH₃,
X = O or NR²,
R² = H or C₁ to C₈ alkyl,
n = 2 to 20,
m = 0 to 2n,
and k and l are identical or different and signify 0 or 1,
and
b) at least one monomer which is substantially free from acidic or anionic groups and is radically copolymerisable with the compounds a).

5. Method for the coating of electrically conductive substrates, characterised in that the substrate is placed as the cathode in an aqueous electrocoating lacquer bath which, in addition to conventional cathodically depositable systems of binders, contains curing agents, pigments, fillers solvents and/or additives conventional in lacquers, and contains as anticratering agents from 0.05 to 5% by weight, referred to the system of binders and to the curing agents optionally present, of one or more copolymers having a fluorine content of from 0.1 to 5% by weight and a weight average molar mass (Mw) of from 2000 to 100000, which are substantially free from acidic or anionic groups and are obtainable by radical polymerisation, and that the covering thus obtained is cured at elevated temperature.

6. Method for the production of a multilayer lacquer, characterised in that one or more further coverings are applied to a substrate coated according to claim 5 and these are cured in succession or together.

7. Method according to claim 5 or 6, characterised in that it is carried out for the coating of automotive bodies or parts thereof.

8. Use of the cathodically depositable electrocoating lacquer baths according to claim 1 or 2 for the cathodic electrocoating lacquering of electrically conductive substrates.

9. Use of the cathodically depositable electrocoating lacquer baths according to claim 1 or 2 for the cathodic deposition of primary coats for multilayer lacquers.

10. Use of the cathodically depositable electrocoating lacquer baths according to claim 1 or 2 for coating automotive bodies or parts thereof by electrocoating lacquering.

11. Use of copolymers having a fluorine content of from 0.1 to 5% by weight and a weight average molar mass (Mw) of from 2000 to 100000, which are substantially free from acidic or anionic groups and are obtainable by radical polymerisation, as anticratering agents in cathodically depositable electrocoating lacquer baths.

12. Use according to claim 11, characterised in that the copolymers have been prepared according to claim 4.

## Revendications

1. Bains aqueux d'électrodéposition cathodique contenant les systèmes de liants usuels aptes à la déposition cathodique et qui peuvent contenir en outre des agents réticulants, des pigments, des matières et charge et/ou des additifs, caractérisés en ce qu'ils contiennent en tant qu'agents anticratères, en proportions de 0,05 à 5 % en poids du liant et le cas échéant des agents réticulants présents, un ou plusieurs copolymères à une teneur en fluor de 0,1 à 5 % en poids et une masse molaire moyenne en poids, Mw, de 2000 à 100 000, qui sont essentiellement exempts de groupes acides ou anioniques et qui sont obtenus par polymérisation radicalaire.

2. Bains d'électrodéposition cathodique selon revendication 1, caractérisés en ce qu'ils contiennent un ou plusieurs copolymères contenant du fluor et qui sont obtenus par polymérisation radicalaire de
a) au moins un composé à insaturation oléfinique choisi parmi ceux qui répondent aux formules générales 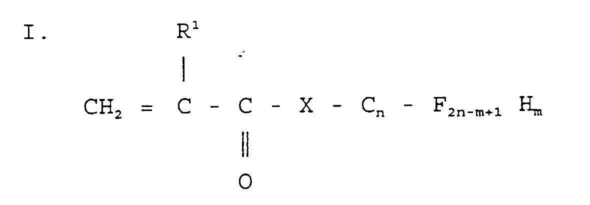 et
II. CH₂ = CH - (CH₂)ₖ - O - (CO)₁ - Cₙ F₂ₙ₋ₘ₊₁ Hₘ
dans lesquelles
R¹ = H ou CH₃,
X = O ou NR²,
R² = H ou alkyle en C1-C8,
n = 2 à 20,
m = 0 à 2n,
et k et 1, indépendamment l'un de l'autre, sont égaux chacun à 0 ou 1,
et
b) au moins un monomère essentiellement exempt de groupes acides ou anioniques et apte à la copolymérisation radicalaire avec les composés a).

3. Procédé pour préparer des bains aqueux d'électrodéposition cathodique contenant des systèmes de liants usuels pour la déposition cathodique avec des agents réticulants, des pigments, des matières de charge, des solvants et/ou des additifs, caractérisé en ce que l'on incorpore dans ces bains de 0,05 à 5 %, par rapport au poids du système liant et le cas échéant des agents réticulants présents, d'un ou plusieurs copolymères à une teneur en fluor de 0,1 à 5 % en poids et une masse molaire moyenne en poids, Mw, de 2000 à 100 000, qui sont essentiellement exempts de groupes acides ou anioniques et qui sont obtenus par polymérisation radicalaire.

4. Procédé selon revendication 3, caractérisé en ce que l'on prépare le ou les copolymères contenant du fluor par polymérisation radicalaire de
a) au moins un composé à insaturation oléfinique choisi parmi ceux qui répondent aux formules générales 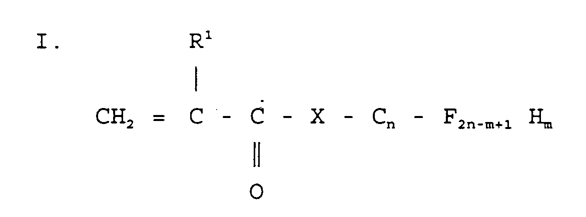 et
II. CH₂ = CH - (CH₂)ₖ - O - (CO)₁ - Cₙ F₂ₙ₋ₘ₊₁ Hₘ
dans lesquelles
R¹ = H ou CH₃,
X = O ou NR²,
R² = H ou alkyle en C1-C8,
n = 2 à 20,
m = 0 à 2n, et
k et 1, indépendamment l'un de l'autre, sont égaux chacun à 0 ou 1,
et
b) au moins un monomère essentiellement exempt de groupes acides ou anioniques et apte à la copolymérisation radicalaire avec les composés a).

5. Procédé pour revêtir des supports conducteurs de l'électricité, caractérisé en ce que l'on place le support, servant de cathode, dans un bain aqueux d'électrodéposition qui, avec des systèmes de liants usuels aptes à la déposition cathodique, contient des agents réticulants, des pigments, des matières de charge, des solvants et/ou des additifs usuels de l'industrie des peintures et vernis, et 0,05 à 5 % en poids, par rapport au système de liants et le cas échéant aux agents réticulants présents, d'un ou plusieurs copolymères à une teneur en fluor de 0,1 à 5 % en poids et une masse molaire moyenne en poids, Mw, de 2000 à 100 000, essentiellement exempts de groupes acides ou anioniques et obtenus par polymérisation radicalaire, qui servent d'agents anticratères, et on durcit le revêtement à température élevée.

6. Procédé pour l'application d'un revêtement à plusieurs couches, caractérisé en ce que, sur un support revêtu selon revendication 5, on applique un ou plusieurs autres revêtements qu'on durcit les uns après les autres ou ensemble.

7. Procédé selon revendication 5 ou 6, caractérisé en ce qu'on l'applique au revêtement de carrosseries de véhicules ou de parties de carrosseries de véhicules.

8. Utilisation des bains d'électrodéposition cathodique selon revendication 1 ou 2 pour le revêtement par électrodéposition cathodique de supports conducteurs de l'électricité.

9. Utilisation des bains d'électrodéposition cathodique selon revendication 1 ou 2 pour la déposition cathodique de sous-couches pour des revêtements à plusieurs couches.

10. Utilisation des bains d'électrodéposition cathodique selon revendication 1 ou 2 pour le revêtement de carrosseries de véhicules ou de parties de carrosseries de véhicules par électrodéposition.

11. Utilisation de copolymères à une teneur en fluor de 0,1 à 5 % en poids et une masse molaire moyenne en poids, Mw, de 2000 à 100 000, essentiellement exempts de groupes acides ou anioniques et qui sont obtenus par polymérisation radicalaire, en tant qu'agents anticratères dans des bains aqueux d'électrodéposition cathodique.

12. Utilisation selon revendication 11, caractérisée en ce que les copolymères ont été préparés selon revendication 4.
